(19) Europäisches Patentamt

European Patent Office

Office européen des brevets

(11) Veröffentlichungsnummer: **0 203 497 B1**

# (12) EUROPÄISCHE PATENTSCHRIFT

(45) Veröffentlichungstag der Patentschrift: **15.01.92**

(21) Anmeldenummer: **86106835.1**

(22) Anmeldetag: **20.05.86**

(51) Int. Cl.⁵: **H02G 15/18**, B29C 61/10

(54) **Längsgeteilte schlauchförmige Hülle, insbesondere Kabelmuffe, aus schrumpfbarem Material.**

(30) Priorität: **23.05.85 DE 3518580**

(43) Veröffentlichungstag der Anmeldung:
**03.12.86 Patentblatt 86/49**

(45) Bekanntmachung des Hinweises auf die
Patenterteilung:
**15.01.92 Patentblatt 92/03**

(84) Benannte Vertragsstaaten:
**AT BE CH DE FR GB IT LI NL SE**

(56) Entgegenhaltungen:
**EP-A- 0 074 280**
**DE-A- 2 820 181**
**GB-A- 1 155 470**

(73) Patentinhaber: **SIEMENS AKTIENGESELL-
SCHAFT**
**Wittelsbacherplatz 2**
**W-8000 München 2(DE)**

(72) Erfinder: **Bachel, Ernst**
**Erlenweg 8**
**W-8085 Geltendorf(DE)**
Erfinder: **Giebel, Wolfgang, Dipl.-Ing.**
**Mathildenstrasse 31 a**
**W-8033 Planegg(DE)**

EP 0 203 497 B1

## Beschreibung

Die Erfindung betrifft eine längsgeteilte, schlauchförmige Hülle, insbesondere Kabelmuffe, aus schrumpfbarem Material mit einer klemmenden Verschlußeinrichtung entlang der Längsränder, bestehend aus einer durchgehenden, abstehenden Ausformung, die von einer längsverlaufenden, etwa U-förmigen Klammer umfaßt ist.

Aus der DE-AS 1 525 815 ist nun ein langer schlauchförmiger Hüllmantel bekannt, der aus schrumpfbarem Material besteht und entlang seiner Längsränder eine klemmende Verschlußeinrichtung aufweist. Diese Verschlußeinrichtung besteht aus einer Ausformung, die als geteilter Wulst ausgebildet ist, wobei diese Teilwülste in geschlossenem Zustand von einer etwa U-förmigen Klammer zusammengehalten werden. Diese Teilwülste befinden sich entlang jedes Längsrandes, so daß die Teilungslinie im geschlossenen Zustand zwischen den Teilwülsten verläuft. Dies bedeutet jedoch, daß mit diesem Hüllmantel entsprechend des zwischen den Teilwülsten befindlichen schrumpfbaren Mittelteils nur ein durch die jeweilige Länge und den Schrumpfungsgrad bestimmter Durchmesserbereich erfaßt werden kann. Außerdem ist nachteilig, daß für die in der Praxis vorkommenden verschiedenen Umhüllungsdurchmesser nicht immer die optimalen Schrumpfungsverhältnisse erreicht werden können, da jeweils entsprechend mehr oder weniger geschrumpft werden muß.

Aus der DE-PS 28 20 181 ist eine längsgeteilte schlauchförmige Hülle oder Kabelmuffe aus schrumpfbarem Material mit einer klemmenden Verschlußeinrichtung entlang der Längsränder bekannt. Einer der Längsränder ist mit einer abstehenden Ausformung und der andere Längsrand mit einer rasterförmigen Nut versehen, wobei Ausformung und Nut so ausgebildet sind, daß sie ineinander rastbar sind. Zur Fixierung dient zusätzlich eine Klammer, welche die rasterförmige Nut außen umfaßt und an der Engstelle zusammenpreßt. Eine Voranpassung ist nicht möglich, da die Verschlußteile an beiden Längsrändern fest angebracht sind.

Aus der europäischen Anmeldung EP-A-0 074 280 ist eine Kabelmuffe bekannt, die profillose Längsränder aufweist, welche einem lose eingebrachten, runden Profilstab angeschmiegt werden können. Zur Fixierung wird über die beiden an den Profilstab angeformten Längsränder eine klammerförmige Schiene aufgebracht.

So liegt dieser Erfindung die Aufgabe zugrunde, eine längsgeteilte, schlauchförmige Hülle, insbesondere eine Kabelmuffe, mit entsprechender Voranpassung an den gerade erforderlichen Umhüllungsdurchmesser zu schaffen, bei der durch entsprechende Hilfen eine Montageerleichterung vor dem Schrumpfvorgang erfolgt. Die gestellte Aufgabe wird nun mit einer längsgeteilten schlauchförmigen Hülle der eingangs beschriebenen Art dadurch gelöst, daß die Ausformung an dem ersten Längsrand seitlich abstehend angeordnet ist, daß der zweite Längsrand profillos und so flexibel ausgebildet ist, daß er dem Profil der Ausformung des ersten Längsrandes anschmiegbar ist, daß die Klammer ein der Ausformung angepaßtes Innenprofil und an den Innenflächen jedes Schenkels längsverlaufende Nocken als Rasterungen aufweist, daß bei den in einem Schenkel parallel verlaufenden Nocken der Abstand zwischen den gegenüberliegenden, der Längsöffnung der Klammer nächstliegenden Nocken größer ist als der Abstand der einwärts nachfolgenden Nocken, wobei die Öffnung so bemessen ist, daß sie mit mindestens einer Rasterung über den der Ausformung angeformten zweiten Längsrand klemmend aufschiebbar ist und wobei das Kopfteil der Klammer und der rückwärtige Teil des ersten Längsrandes als Führungsflächen für ein Schließwerkzeug ausgebildet sind.

Bisher konnten die gebräuchlichen Hüllmäntel nur in bestimmten Schrumpfungsbereichen eingesetzt werden, da bei fest angeordneten Verschlußwülsten entlang der Längsränder die Länge des schrumpffähigen Bereiches zwischen den beiden Wülsten bei einem bestimmten Schrumpfungsgrad bestimmend war. Hinzu kommt, daß bei einer vorgegebenen Länge des schrumpffähigen Bereiches wohl ein gewisser Bereich von Außendurchmessern erfaßbar war, doch ist dann die Schrumpfung nicht immer optimal durchzuführen, zumal dann, wenn die gerade erforderliche Schrumpfung nahe am zulässigen Wert liegt. Diese Nachteile werden mit der längsgeteilten, schlauchförmigen Hülle gemäß der Erfindung vermieden; denn mit dieser Hülle kann bereits beim Umhüllungsvorgang eine Voranpassung bezüglich des Durchmessers erfolgen. Dies bedeutet, daß aufgrund dieser Voranpassung jeweils optimale Schrumpfungsverhältnisse bezüglich der Schrumpfung und der dabei wirksamen Schrumpfkräfte erreichbar sind. Dies wird gemäß der Erfindung dadurch erreicht, daß nur eine Ausformung entlang eines Längsrandes der Hülle angeordnet ist und der zweite Längsrand profillos ist, so daß dieser je nach Bedarf, das heißt je nach erforderlicher Länge des schrumpfbaren Mittelteils, fixiert werden kann. Diese Voranpassung an den Umhüllungsdurchmesser erfolgt durch die Anformung des profillosen Längsrandes an die abstehende Ausformung des ersten Länsrandes und schließlich durch die Fixierung mit Hilfe einer U-förmigen Klammer, die über den an die Ausformung des ersten Längsrandes angeformten profillosen zweiten Längsrand klemmend aufgeschoben wird. Diese Fixierung durch die Klammer kann in mehreren Rasterungen erfolgen, wobei die endgültige Verklemmung bei der Schrumpfung erfolgt, da durch die Zunahme der Wandung des angeformten Längsrandes während der Schrumpfung eine zusätzliche Verklemmung im Verschlußbereich zwischen der Klammer und der Ausformung bewirkt wird. Entsprechende Einlagerungen im Inneren der Hülle gewährleisten die erforderliche Dichtungswirkung und verbessern die Haftung zum umhüllten Gegenstand. Hit Hilfe eines geeigneten Werkzeuges mit entsprechenden angepaßten Druckflächen läßt sich die Fixierung der Klammer zusätzlich erleichtern.

Die Erfindung wird nun anhand von vier Figuren näher erläutert.

Figur 1    zeigt die Umhüllung im geschlossenen, das heißt montierten Zustand.

Figur 2    verdeutlicht in einem Ausschnitt den Verschlußbereich.

Figur 3    skizziert eine Zusatzeinlagerung von Dichtungsmittel im Verschlußbereich.

Figur 4    veranschaulicht ein Werkzeug, mit dem der Verschluß in einfacher Weise zusammengefügt werden kann.

Figur 5    zeigt die Umhüllung mit einer separaten Klebefolie.

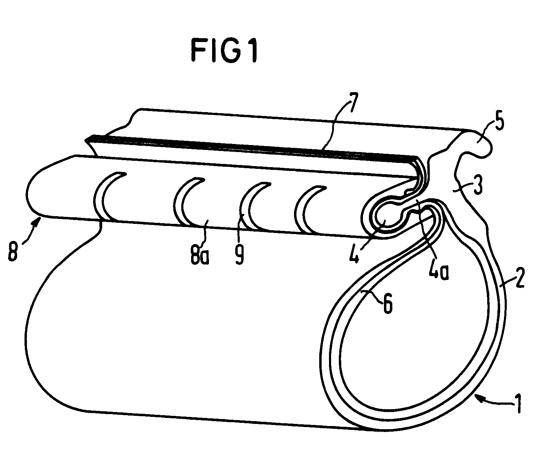

Die Figur 1 zeigt die längsgeteilte Hülle 1 gemäß der Erfindung wie sie als Umhüllung für einen beliebigen Gegenstand montiert wird. Diese Hülle 1 besteht im wesentlichen aus dem schrumpfbaren Mittelteil 2, der um den zu umhüllenden Gegenstand herumgelegt wird, und aus einer längs verlaufenden, seitlich abstehenden Ausformung 4-4a entlang des einen Längsrandes 3, über welche der zweite profillose Längsrand 7 der Hülle 1 angeformt und durch eine aufgedrückte Klammer 8 fixiert wird. Die Ausformung 4-4a besteht aus einem verdickten Ende, einer gegenüber dem Ansatz 4a verstärkten Erweiterung 4, die zum Beispiel knopfförmig ausgebildet ist, so daß auf diese Weise eine Art Hinterschneidung entsteht, in welche die Klammer 8 eingerastet wird. Diese Ausformung 4-4a verläuft entlang des ersten Längsrandes 3, der gegenüber dem Mittelteil 2 verstärkt ausgebildet ist, um die erforderliche Festigkeit im Verschlußbereich zu gewährleisten. Weiterhin weist dieser verstärkte Längsrand 3 einen Haltewulst 5 auf, der für den Dehnungsprozeß bei der Herstellung der Hülle 1 dient. Die Innenflächen der Hülle 1 weisen ein bei Wärme aktivierbares Dichtungsmittel 6 auf, zum Beispiel einen handelsüblichen Schmelzkleber. Dieses Dichtungsmittel 6 ist in diesem Falle als Beschichtung aufgebracht. Die als Schiene entlang der Ausformung 4-4a aufgedrückte Klammer 8 weist in ihrem Kopfteil 8a querverlaufende Schlitze 9 auf, durch welche die Flexibilität in Längsrichtung verbessert werden kann. Die Klammer 8 besitzt ein der Ausformung 4-4a angepaßtes Innenprofil und ist in der Öffnung so bemessen, daß sie über die mit dem profillosen Längsrand 7 belegte Ausformung 4-4a klemmend aufgedrückt werden kann. Vorzugsweise weist der verstärkte Längsrand 3 gegenüber dem schrumpfbaren Mittelteil 2 der Hülle 1 einen höheren Vernetzungsgrad auf, so daß dieser bei Wärmeeinwirkung formbeständig bleibt. Die Klammer 8 kann zum Beispiel aus Metall, vorzugsweise aus einem Federstahl, oder auch aus einem Duroplasten hergestellt werden, wobei letzterer zweckmäßigerweise mit einer Glasfaserverstärkung versehen wird.

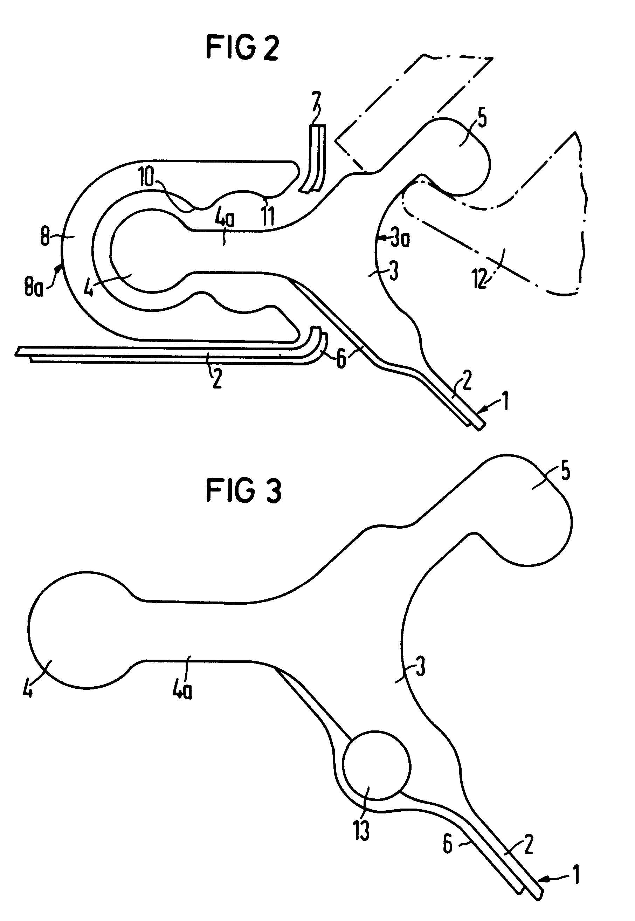

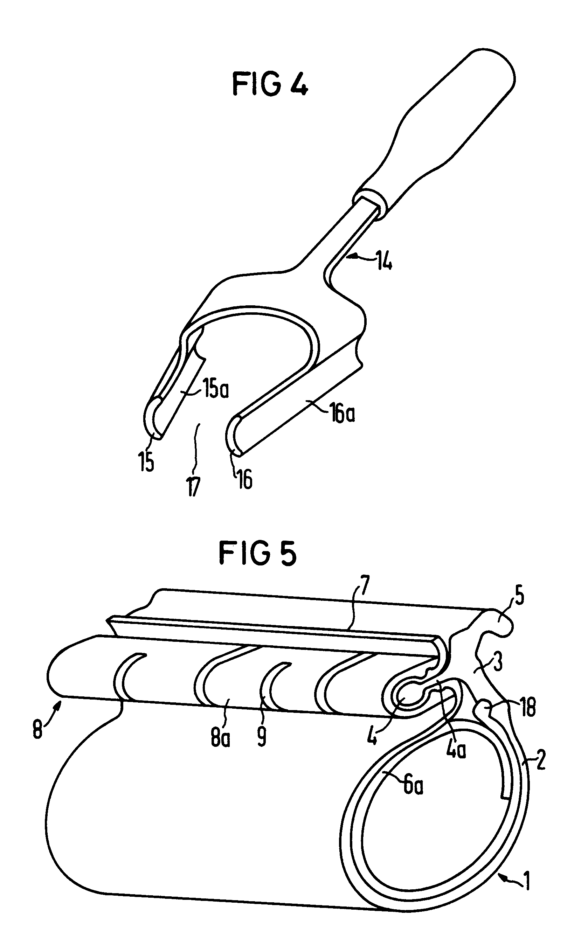

In Figur 2 ist nun zur Verdeutlichung der Verschlußbereich der Hülle 1 vergrößert dargestellt. Dabei wird besonders die knopfartige Erweiterung 4 der Ausformung 4-4a deutlich, die entlang des verstärkten Längsrandes 3 abstehend angeordnet ist. Der schrumpfbare Mittelteil 2 sowie der profillose zweite Längsrand 7 sind in abgebrochener Weise dargestellt, um die Verhältnisse zwischen der Klammer 8 und der Ausformung 4-4a besser verdeutlichen zu können. So wird hierdurch klar, daß die Öffnung der Klammer 8 so bemessen ist, daß zwischen ihr und der Ausformung 4-4a der profillose Längsrand 7 eingelegt bzw. angeformt werden kann. Dabei weist die hier dargestellte Klammer 8 in ihren Schenkeln zwei längsverlaufende Nocken 10 und 11 auf, wobei zwischen ihnen eine längsverlaufende Nut entsteht, die für eine erste, leichte Rasterung bei der Montage gedacht ist. In diese erste Raststellung kann nun die Klammer 8 verhältnismäßig leicht ohne Hilfsmittel aufgedrückt werden und ist somit für das endgültige Einrasten mittels eines geeigneten Werkzeuges bereits vorjustiert. Dabei sind das Kopfteil 8a der Klammer 8 und der rückwärtige Teil 3a des ersten Längsrandes 3 als Führungsflächen für ein Schließwerkzeug, wie es in Figur 4 gezeigt wird, ausgebildet. Die endgültige und dichte Fixierung des Verschlußbereiches erfolgt schließlich während des Schrumpfvorganges, da sich durch die Rückbildung des schrumpfbaren Längsrandes 7 eine Wandstärkenverdickung ergibt, was zu einer zusätzlichen "Verpressung" des Längsrandes 7 zwischen der Klammer 8 und der Ausformung 4-4a führt. Das Dichtmittel auf der Innenfläche der Hülle 1 ist in diesem Fall als Schmelzkleberbeschichtung 6 ausgeführt und wird um die Ausformung (4-4a) mit herumgelegt, so daß auch im Verschlußbereich eine Abdichtung erfolgt. Schließlich ist angedeutet, daß der verstärkte Längsrand 3 am oberen Ende einen Haltewulst 5 aufweist, der dem Ansetzen eines Dehnwerkzeuges 12 beim Aufweiten dient und der je nach Bedarf in Längsrichtung abgeschnitten werden kann.

Die Figur 3 zeigt ein erweitertes Ausführungsbeispiel, bei dem im Verschlußbereich eine zusätzliche Einlagerung als Schmelzkleberüberschuß 13 eingebracht ist. In diesem Beispiel ist dieser Schmelzkleberüberschuß 13 in einer Art längs verlaufenden Nut des Längsrandes 3 eingelagert und wird wie auch die Innenbeschichtung 6 während des Schrumpfvorganges durch Wärmeeinwirkung aktiviert. In gleicher Weise kann auch ein elastisches Material eingelagert werden, so daß auch auf diese Weise Unregelmäßigkeiten im Verschlußbereich ausgeglichen werden können.

In Figur 4 ist nun das Werkzeug 14 dargestellt, mit dessen Hilfe der in einer ersten Rasterung vorfixierte Verschluß in seine endgültige Lage gebracht werden kann. Dieses Werkzeug besitzt zwei konisch zulaufende Schenkel 15 und 16, die als bogenförmige Andrucksflächen 15a und 16a ausgebildet sind. Diese beiden Schenkel 15 und 16 werden mit ihren Andruckflächen 15a und 16a entlang der Führungsflächen am Kopfteil 8a der Klammer 8 und des rückwärtigen Teils 3a des Längsrandes 3 gezogen, wodurch aufgrund der konisch verlaufenden Schenkel die Klammer 8 in die endgültige Rasterung eingedrückt wird. Nach diesem Schließvorgang kann mit der Schrumpfung begonnen werden.

Die Figur 5 zeigt ein Ausführungsbeispiel, bei dem das Dichtmittel als lose separate Klebefolie 6a eingebracht ist. Es ist jedoch zweckmäßig, diese Kleberfolie entlang einer Kante 18 an der Hülle zu befestigen, so daß sie beim Umhüllen eines Gegenstandes bereits in der Hauptlage fixiert ist. Bei einer solchen Anordnung kann dann die Kleberfolie 6a wieder nach einwärts in den Umhüllungsraum eingeschlagen werden, so daß in diesem Fall der Verschlußbereich zwischen der Ausformung 4-4a und der Klammer 8 nicht verklebt wird. Dies ist bevorzugt dann anzuwenden, wenn die Absicht besteht die Umhüllung wieder zu öffnen. Weiterhin ist hier angedeutet, daß die Klammer 8 zur Erhöhung der Flexibilität abwechselnd vom Rand her eingeschnittene Schlitze 9 aufweist.

## Patentansprüche

1. Längsgeteilte schlauchförmige Hülle (1), insbesondere Kabelmuffe, aus schrumpfbarem Material mit einer klemmenden Verschlußeinrichtung (4-8) entlang der Längsränder (3, 7), bestehend aus einer durchgehenden, abstehenden Ausformung (4 - 4a), die von einer längsverlaufenden, etwa U-förmigen Klammer (8) umfaßt und an dem ersten Längsrand (3) seitlich abstehend angeordnet ist, **dadurch gekennzeichnet,** daß der zweite Längsrand (7) profillos und so flexibel ausgebildet ist, daß er dem Profil der Ausformung (4-4a) des ersten Längsrandes (3) anschmiegbar ist, daß die Klammer (8) ein der Ausformung (4-4a) angepaßtes Innenprofil und an den Innenflächen jedes Schenkels längsverlaufende Nocken (10, 11) als Rasterungen aufweist, daß bei den in einem Schenkel parallel verlaufenden Nocken (10, 11) der Abstand zwischen den gegenüberliegenden, der Längsöffnung der Klammer (8) nächstliegenden Nocken (11) größer ist als der Abstand der einwärts nachfolgenden Nocken (10), wobei die Öffnung so bemessen ist, daß sie mit mindestens einer Rasterung (10, 11) über den der Ausformung (4-4a) angeformten zweiten Längsrand (7) klemmend aufschiebbar ist und wobei das Kopfteil (8a) der Klammer (8) und der rückwärtige Teil (3a) des ersten Längsrandes (3) als Führungsflächen für ein Schließwerkzeug ausgebildet sind.

2. Längsgeteilte schlauchförmige Hülle nach Anspruch 1, **dadurch gekennzeichnet,** daß der erste Längsrand (3) gegenüber dem gedehnten schrumpfbaren Mittelteil (2) der Kabelmuffe (1) verstärkt ausgebildet ist.

3. Längsgeteilte schlauchförmige Hülle nach einem der vorhergehenden Ansprüche, **dadurch gekennzeichnet,** daß der erste Längsrand (3) gegenüber dem Mittelteil (2) einen höheren Vernetzungsgrad aufweist.

4. Längsgeteilte schlauchförmige Hülle nach einem der vorhergehenden Ansprüche, **dadurch gekennzeichnet,** daß die Innenwandung der Kabelmuffe (1) eine Schmelzkleberbeschichtung (6) aufweist.

5. Längsgeteilte schlauchförmige Hülle nach einem der Ansprüche 1 bis 3, **dadurch gekennzeichnet,** daß eine der Fläche der Kabelmuffe (1) entsprechende Kleberfolie (6a) im Innenbereich der Kabelmuffe (1) angeordnet ist, wobei diese Kleberfolie (6a) entlang des verstärkten ersten Längsrandes (3), zumindest entlang der Kante (18) befestigt ist.

6. Längsgeteilte schlauchförmige Hülle nach einem der vorhergehenden Ansprüche, **dadurch gekennzeichnet,** daß der erste, verstärkte Längsrand (3) einen Haltewulst (5) aufweist.

7. Längsgeteilte schlauchförmige Hülle nach einem der vorhergehenden Ansprüche, **dadurch gekennzeichnet,** daß die Ausformung (4-4a) an der Erweiterung (4) etwa kreisförmigen Querschnitt aufweist, wobei der Durchmesser größer ist als die Dicke ihres Ansatzes (4a), so daß eine Hinterschneidung gebildet ist.

8. Längsgeteilte schlauchförmige Hülle nach einem der vorhergehenden Ansprüche,
**dadurch gekennzeichnet,**
daß die Klammer (8) aus Metall, vorzugsweise aus Federstahl besteht.

9. Längsgeteilte schlauchförmige Hülle nach einem der Ansprüche 1 bis 7,
**dadurch gekennzeichnet,**
daß die Klammer (8) aus einem glasfaserverstärkten Duroplast besteht.

10. Längsgeteilte schlauchförmige Hülle nach einem der vorhergehenden Ansprüche,
**dadurch gekennzeichnet,**
daß die Klammer (8) quer zur Längsrichtung in ihrem Kopfteil (8a) Schlitze (9) aufweist.

11. Längsgeteilte schlauchförmige Hülle nach einem der vorhergehenden Ansprüche,
**dadurch gekennzeichnet,**
daß im Übergangsbereich zwischen dem verstärkten Längsrand (3) und dem gedehnten Mittelbereich (2) der Kabelmuffe (1) ein Schmelzkleberüberschuß (13), vorzugsweise als bandförmige Einlage, angeordnet ist.

12. Verfahren zum Verschließen der längsgeteilten schlauchförmigen Hülle nach einem der vorhergehenden Ansprüche,
**dadurch gekennzeichnet,**
daß ein Werkzeug (14) mit zwei konisch zusammenlaufenden, den Führungsflächen des Kopfteils (8a) der Klammer (8) und des rückwärtigen Teils (3a) des Längsrandes (3) angepaßten Andruckflächen (15a, 16a) nach Einfügen des zweiten Längsrandes (7) und Fixierung der Klammer (8) in der ersten Rasterung (11) zum endgültigen Schließen des Verschlusses entlanggezogen wird.

**Claims**

1. Longitudinally split tubular envelope (1), preferably a cable sleeve, of shrinkable material with a clamping closing device (4-8) along the longitudinal edges (3, 7), consisting of a continuous, projecting formation (4-4a) which is surrounded by a longitudinally running, approximately in-shaped bracket (8) and is arranged projecting sideways on the first longitudinal edge (3), characterised in that the second longitudinal edge (7) has no profile and is designed to be 50 flexible that it can be joined closely to the profile of the formation (4-4a) of the first longitudinal edge (3), in that the bracket (8) has an inner profile matched to the formation (4-4a) and has cams (10, 11), as catches, which run longitudinally on the inner surfaces of each limb, in that in the case of the cams (10, 11) running parallel in one limb, the distance between the opposite cams (11) located next to the longitudinal opening of the bracket (8) is greater than the distance of the cams (10) following next inwards, the opening being of such a size that it can be pushed in a clamping manner over the second longitudinal edge (7) on which the formation (4-4a) is integrally formed, with at least one catch (10, 11), the head part (8a) of the bracket (8) and the rearward part (3a) of the first longitudinal edge (3) being designed as guide surfaces for a closing tool.

2. Longitudinally split tubular envelope according to Claim 1, characterised in that the first longitudinal edge (3) is designed reinforced in comparison to the extended shrinkable centre part (2) of the cable sleeve (1).

3. Longitudinally split tubular envelope according to one of the preceding claims, characterised in that the first longitudinal edge (3) has a higher level of cross-linking in comparison to the centre part (2).

4. Longitudinally split tubular envelope according to one of the preceding claims, characterised in that the inner wall of the cable sleeve (1) has a fusion adhesive coating (6).

5. Longitudinally split tubular envelope according to one of Claims 1 to 3, characterised in that an adhesive film (6a) corresponding to the surface of the cable sleeve (1) is arranged in the inner region of the cable sleeve (1), this adhesive film (6a) being attached along the reinforced first longitudinal edge (3), at least along the edge (18).

6. Longitudinally split tubular envelope according to one of the preceding claims, characterised in that the first, reinforced longitudinal edge (3) has a retaining bead (5).

7. Longitudinally split tubular envelope according to one of the preceding claims, characterised in that the formation (4-4a) on the extension (4) has an approximately circular cross-section, the diameter being greater than the thickness of its projection (4a), so that an undercut is formed.

8. Longitudinally split tubular envelope according to one of the preceding claims, characterised in that the bracket (8) consists of metal, preferably of spring steel.

9. Longitudinally split tubular envelope according to one of Claims 1 to 7, characterised in that the bracket (8) consists of a glass-fibre reinforced thermoplastic.

10. Longitudinally split tubular envelope according to one of the preceding claims, characterised in that the bracket (8) has slots (9) in its head part (8a), transversely with respect to the longitudinal direction.

11. Longitudinally split tubular envelope according to one of the preceding claims, characterised in that, in the transition region between the reinforced longitudinal edge (3) and the extended centre region (2) of the cable sleeve (1), there is arranged a fusion adhesive surplus (13), preferably as a strip-shaped insert.

12. Method for closing the longitudinally split tubular envelope according to one of the preceding claims, characterised in that a tool (14), having two pressure surfaces (15a, 16a) which run together conically and are matched to the guide surfaces of the head part (8a) of the bracket (8) and of the rearward part (3a) of the longitudinal edge (3), is drawn along for final sealing of the closing device, after insertion of the second longitudinal edge (7) and fixing of the bracket (8) in the first catch (11).

**Revendications**

1. Gaine tubulaire souple (1), fendue longitudinalement, notamment manchon de câble, en un matériau rétractable, comprenant, le long des bords longitudinaux (3, 7), un dispositif de fermeture (4 à 8) par serrage, constitué d'une excroissance saillante (4 à 4a), continue, qui est entourée d'un crampon (8) sensiblement en forme de U et qui est disposée en saillie latéralement sur le premier bord longitudinal (3),
   caractérisée,
   en ce que le second bord longitudinal (7) ne présente pas de profil propre et est si souple qu'il peut épouser le profil de l'excroissance (4 à 4a) du premier bord longitudinal (3), en ce que le crampon (8) présente un profil intérieur adapté à l'excroissance (4, 4a) et, sur les surfaces intérieures de chaque branche, des cames saillantes (10, 11) s'étendant longitudinalement et servant de moyens d'encliquetage, en ce que, pour les cames (10, 11) s'étendant parallèlement dans une branche, la distance, entre les cames (11) mutuellement opposées les plus proches de l'ouverture longitudinale du crampon (8), est supérieure à la distance entre les cames suivantes et dirigées vers l'intérieur, l'ouverture ayant des dimensions telles qu'elle peut être enfilée avec serrage par au moins un moyen d'encliquetage (10, 11) sur le second bord longitudinal (7) issu de l'excroissance (4 à 4a), alors que la tête (8a) du crampon (8) et la partie arrière (3a) du premier bord longitudinal (3) sont constituées en surfaces de guidage d'un outil de fermeture.

2. Gaine tubulaire souple, fendue longitudinalement suivant la revendication 1,
   caractérisée,
   en ce que le premier bord longitudinal (3) est renforcé par rapport à la partie médiane (2) rétractable et étirée du manchon de câble (1).

3. Gaine tubulaire souple, fendue longitudinalement suivant l'une des revendications précédentes,
   caractérisée,
   en ce que le premier bord longitudinal (3) présente, par rapport à la partie médiane (2), un degré de réticulation plus élevé.

4. Gaine tubulaire souple, fendue longitudinalement suivant l'une des revendications précédentes,
   caractérisée,
   en ce que la paroi intérieure du manchon de câble (1) comporte un revêtement de colle fusible (6).

5. Gaine tubulaire souple, fendue longitudinalement suivant l'une des revendications 1 à 3,
   caractérisée,
   en ce qu'un ruban adhésif (6a), correspondant à la surface du manchon de câble (1), est disposé dans la partie intérieure du manchon de câble (1), ce ruban adhésif (6a) étant fixé le long du premier bord longitudinal (3) renforcé, au moins le long de l'arête (18).

6. Gaine tubulaire souple, fendue longitudinalement suivant l'une des revendications précédentes,
   caractérisée,
   en ce que le premier bord longitudinal (3) renforcé comporte un bourrelet de maintien (5).

7. Gaine tubulaire souple, fendue longitudinalement suivant l'une des revendications précédentes,

caractérisée,

en ce que l'excroissance (4 à 4a) présente, dans la partie élargie (4), une section transversale sensiblement circulaire, le diamètre étant plus grand que l'épaisseur de sa partie de raccordement (4a), de manière à former une contre-dépouille.

8. Gaine tubulaire souple, fendue longitudinalement suivant l'une des revendications précédentes,

caractérisée,

en ce que le crampon (8) est en métal, de préférence en acier pour ressort.

9. Gaine tubulaire souple, fendue longitudinalement suivant l'une des revendications 1 à 7,

caractérisée,

en ce que le crampon (8) est en une résine thermoplastique renforcée par de la fibre de verre.

10. Gaine tubulaire souple, fendue longitudinalement suivant l'une des revendications précédentes,

caractérisée,

en ce que la tête (8a) du crampon (8) comporte des fentes (9) transversalement à la direction longitudinale.

11. Gaine tubulaire souple, fendue longitudinalement suivant l'une des revendications précédentes,

caractérisée,

en ce que, dans la région de transition entre le bord longitudinal (3) renforcé et la partie médiane (2) étirée du manchon de câble (1), est prévu un excès de colle fusible (13), de préférence sous la forme d'une bande d'insertion.

12. Procédé de fermeture de la gaine tubulaire souple, fendue longitudinalement suivant l'une des revendications précédentes,

caractérisé,

en ce qu'il consiste à faire passer tout du long, pour fermer définitivement la fermeture, un outil (14) ayant deux surfaces d'application d'une pression (15a, 16a) qui convergent coniquement et qui sont adaptées aux surfaces de guidage de la tête (8a) du crampon (8) et de la partie arrière (3a) du bord longitudinal (3), après avoir inséré le second bord longitudinal (7) et après avoir fixé le crampon (8) dans le premier crantage (11).

# FIG 1

EP 0 203 497 B1

# FIG 2

# FIG 3

# FIG 4

# FIG 5